# EUROPÄISCHE PATENTSCHRIFT

(11) **EP 2 388 877 B1**
(45) Veröffentlichungstag und Bekanntmachung des Hinweises auf die Patenterteilung: **27.07.2016**
(21) Anmeldenummer: 11002993.1
(22) Anmeldetag: 09.04.2011
(51) Int. Cl.: H02G 3/38, H02G 9/10

(54) **Unterflur-Schacht für die Energieverteilung und/oder die Telekommunikation**
Subsurface shaft for energy distribution and/or telecommunications
Cage souterraine pour la distribution d'énergie et/ou la télécommunication

(30) Priorität: 22.05.2010 DE 102010021294
(43) Veröffentlichungstag der Anmeldung: 23.11.2011
(73) Patentinhaber: Langmatz GmbH, 82467 Garmisch-Partenkirchen (DE)
(72) Erfinder: Capka, Rainer, 82444 Schlehdorf (DE)
(74) Vertreter: Flosdorff, Jürgen

(56) Entgegenhaltungen:
- DE-A1- 1 949 694
- GB-A- 2 452 740
- JP-A- 5 260 636
- US-A- 4 694 619

## Beschreibung

Die Erfindung betrifft einen Unterflur-Schacht für die Energieverteilung und/oder die Telekommunikation, mit einem Deckel, der an einer Seite schwenkbar an dem Schacht angebracht ist, wobei unter dem Deckel eine luftdichte Haube angeordnet ist, die aus einer horizontalen Lage in dem Schacht in eine angehobene Lage schwenkbar ist, in der sie aus dem Schacht heraus ragt, wobei die Haube in der horizontalen Lage Elemente der Energieverteilung und/oder der Telekommunikation von oben überdeckt.

Wenn der Schacht voll Wasser läuft, schützt die Haube die innerhalb ihres umgekehrt wannenförmigen Innenraums befindlichen Elemente der Energieverteilung und/oder der Telekommunikation vor einer Berührung mit dem Wasser, da die die Haube ausfüllende Luft bei steigendem Wasserspiegel nicht aus der Haube entweichen kann. Wenn der Wasserspiegel wieder sinkt, indem das Wasser aus dem Schacht ausläuft, sind die Elemente der Energieverteilung und/oder der Telekommunikation unbeeinträchtigt erhalten.

Herkömmliche Hauben sind bisher mit einem eigenen Halte- und Schwenkmechanismus versehen, was mit einem erheblichen konstruktiven Aufwand verbunden ist.

Aus US 4 694 619 A ist ein Unterflur-Schacht für die Energieverteilung bekannt, der einen Deckel aufweist, der an einer Seite schwenkbar an dem Schachtrahmen angebracht ist, wobei unter dem Deckel eine luftdichte Haube angeordnet ist, die aus einer horizontalen Lage in dem Schacht in eine angehobene Lage schwenkbar ist, in der sie aus dem Schacht herausragt, wobei die Haube in der horizontalen Lage Elemente der Energieverteilung und/oder der Telekommunikation von oben überdeckt und wobei die Haube an dem Deckel befestigt ist, so dass sie gemeinsam mit dem Deckel verschwenkbar ist. Dabei ist die Haube drehbeweglich an dem Deckel befestigt.

Der vorliegenden Erfindung liegt die Aufgabe zugrunde, einen Schacht der betrachteten Art so zu verbessern, dass das Problem eines möglichen Wassereintritts ins Innere der Haube gelöst ist.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass die Haube, die eine nach unten offene Wannenform hat, an dem Deckel, d.h. in der horizontalen Lage unter dem Deckel befestigt ist, so dass sie gemeinsam mit dem Deckel verschwenkbar ist, und dass der Deckel ein Durchgangsloch aufweist, das gegenüber der Haube seitlich versetzt ist und durch das von der Außenseite des Schachtes aus ein Schlauch ins Innere des Schachtes einführbar ist, um Wasser aus dem Schacht abzusaugen.

Dadurch, dass die Haube an dem Deckel zur gemeinsamen Verschwenkung befestigt ist, erübrigt sich ein gesonderter Schwenk- und Haltemechanismus für die Haube, wodurch die Herstellungskosten des Unterflur-Schachtes signifikant verringert sind. Das Problem eines Wasserkontaktes der innerhalb der Haube befindlichen Elemente der Energieverteilung und/oder der Telekommunikation ist dadurch gelöst, dass der Deckel ein Durchgangsloch aufweist, das solche Abmessungen hat, dass von der Außenseite des Schachtes aus ein Schlauch ins Innere des Schachtes einführbar ist, um Wasser mittels einer Pumpe aus dem Schacht abzusaugen. Würde nämlich bei voll gelaufenem Schacht der Deckel mit der daran befestigten luftdichten Haube geöffnet, d.h. hochgeschwenkt, während sich die Haube wenigstens teilweise unter Wasser befindet, träte die Luft schlagartig unter dem dann schrägen Rand der Haube aus, wobei gleichzeitig Wasser in die Haube eindringen würde. Die Folge wäre ein Kurzschluss, und es dürfte erforderlich sein, die Elemente gegen neue auszutauschen. Ein Monteur, der Arbeiten in dem Schacht oder an den Elementen der Energieverteilung und/oder der Telekommunikation ausführen will,
könnte zudem zunächst von außen nicht erkennen, dass der Schacht mit Wasser vollgelaufen ist. Dies würde er erst bei angehobenem Deckel feststellen, d.h. in einem Zustand, in dem bereits Wasser in die luftdichte Haube eingetreten wäre.

Dabei ist das Loch gegenüber der Haube derart versetzt, dass der Schlauch an der Haube vorbei in den unteren Bereich des Schachtes eingeführt werden kann. Durch das Loch kann auch zunächst beispielsweise ein Stab eingeführt werden, der einen evtl. Wasserstand innerhalb des Schachtes anzeigt, wobei auch eine visuelle Prüfung des Wasserstandes mit Hilfe einer Taschenlampe oder dergleichen möglich sein dürfte.

Bevorzugt ist in weiterer Ausgestaltung der Erfindung, dass der Deckel einen Gehäuseteil mit einer zu öffnenden Abdeckung und einer Bodenwand aufweist, durch die das Durchgangsloch hindurch führt. Die Abdeckung verhindert den Eintritt von Schmutzstoffen und Wasser in den Gehäuseteil und von dort durch das bevorzugt kreisrunde Loch ins Innere des Schachtes. Dieser Gehäuseteil befindet sich vorzugsweise in einem Randbereich des Deckels.

Die Elemente der Energieverteilung und/oder der Telekommunikation sind vorzugsweise innerhalb der Haube an deren Boden und/oder Seitenwand befestigt. Die Haube sollte aus rostfreiem Stahl bestehen.

Der Deckel mit der Haube kann in eine vertikale Lage schwenkbar sein. Es ist aber bevorzugt, dass der Deckel mit der Haube über die vertikale Lage hinaus bis zu einem Anschlag schwenkbar ist, so dass der Deckel mit der Haube durch die Überkopflage ohne zusätzliche Stützglieder stabil gehalten ist.

Es liegt im Rahmen der Erfindung, dass sich das Durchgangsloch auch in einem Bereich des Deckels befinden kann, der mit der Lage der darunter befindlichen Haube zusammen fällt, wobei dann der Schlauch schräg an der Haube vorbei eingeführt werden muss. Diese Anordnung erscheint aber weniger zweckmäßig.

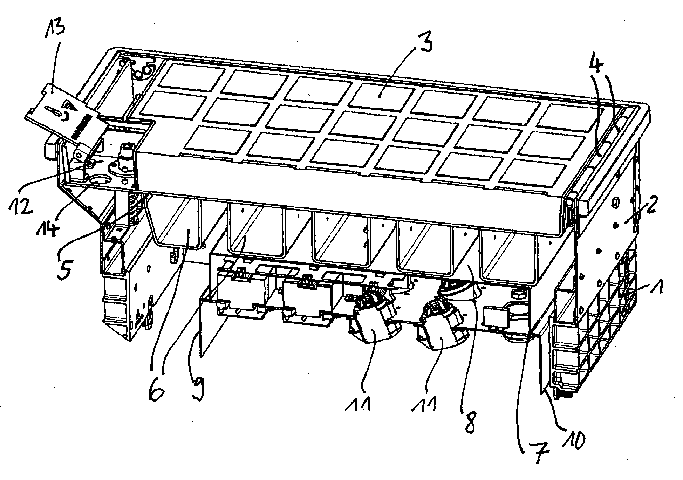

Weitere Einzelheiten der Erfindung ergeben sich aus der nachfolgenden Beschreibung einer bevorzugten Ausführungsform der Erfindung sowie anhand der Zeichnung. Die einzige Figur zeigt dabei eine teilweise geschnittene Ansicht des oberen Endbereich eines Schachtes mit geschlossenem Deckel, wobei der Vertikalschnitt die Sicht auf den Gehäuseteil mit dem Durchgangsloch frei gibt.

Die Figur zeigt den oberen Randbereich eines aus Kunststoff bestehenden Schachtes 1, dessen oberer Endabschnitt durch einen aus Metall bestehenden Schachtrahmen 2 gebildet ist. In dem Schachtrahmen 2 sitzt ein rechteckiger Schachtdeckel 3, der an der in der Figur rechten Seite mittels scharnierartiger Gelenke 4 an dem Schachtrahmen 2 angelenkt ist.

Der Deckel 3 hat an seinem oberen Teil im wesentlichen die Form einer Wanne, die mit Beton gefüllt oder ausgepflastert ist. Unter der Bodenwand 5 sind kastenförmige Hohlprofile 6 befestigt, die die Stabilität des Deckels 3 erhöhen.

An den Unterseiten der kastenförmigen Hohlprofile 6 ist eine luftdichte Haube 7 unbeweglich befestigt, beispielsweise angeschweißt. Die Haube 7 besteht aus einer geschlossenen oberen Wand 8 und einer umlaufenden Außenwand 9, die sich stufenförmig nach unten verbreitern kann. In der Einbaulage verläuft der untere Rand 10 der Haube 7 horizontal. Innerhalb der Haube 7 sind Elemente der Energieverteilung etc. 11 befestigt, die somit von der Haube 7 überdeckt sind.

Etwa in der Mitte des Deckels 3 befindet sich an dem linken Randbereich des Deckels 3 ein Gehäuseteil 12, das von dem wannenförmigen Teil zur Aufnahme des Betons abgetrennt ist und eine schwenkbare Abdeckung 13 aufweist, mit der der Gehäuseteil 12 oben verschließbar ist. Durch die Bodenwand 5 des Deckels verläuft im Bereich des Gehäuseteils 12 ein kreisrundes Durchgangsloch 14, das einen solchen Durchmesser hat, dass ein Schlauch durch das Loch 14 ins innere des Schachtes 1 einführbar ist, um darin eingelaufenes Wasser aus dem Schacht 1 abzupumpen. Das Loch 14 ist seitlich versetzt gegenüber der Haube 7, so dass der Schlauch an der Haube 7 vorbei problemlos einführbar ist.

Bevor ein Monteur den Deckel 3 öffnet, um Arbeiten im Inneren des Schachtes 1 oder an den in der Haube befestigten Elementen durchzuführen, überprüft er - visuell oder mittels eines Stabes etc. - ob der Schacht mit Wasser voll gelaufen ist. Steht in dem Schacht ein Wasserspiegel, der bis zu der Haube 7 oder darüber hinaus reicht, wird Wasser mit Hilfe eines durch das Loch 14 in den Schacht eingeführten Schlauches abgepumpt. Danach kann der Deckel 3 mit der Haube 7 gefahrlos geöffnet werden.

## Patentansprüche

1. Unterflur-Schacht (1) für die Energieverteilung und/oder die Telekommunikation, mit einem Deckel (3), der an einer Seite schwenkbar an dem Schachtrahmen (2) angebracht ist, wobei unter dem Deckel (3) eine luftdichte Haube (7) angeordnet ist, die aus einer horizontalen Lage in dem Schacht (1) in eine angehobene Lage schwenkbar ist, in der sie aus dem Schacht (1) herausragt, wobei die Haube (7) in der horizontalen Lage Elemente der Energieverteilung und/oder der Telekommunikation von oben überdeckt und
wobei die Haube (7) an dem Deckel (3) befestigt ist, so dass sie gemeinsam mit dem Deckel (3) verschwenkbar ist,
**dadurch gekennzeichnet,**
**dass** die Haube (7) unbeweglich an dem Deckel (3) befestigt ist und
**dass** der Deckel (3) ein Durchgangsloch (14) aufweist, das gegenüber der Haube (7) seitlich versetzt ist und durch das von der Außenseite des Schachtes aus ein Schlauch ins Innere des Schachtes einführbar ist, um Wasser aus dem Schacht abzusaugen.

2. Unterflur-Schacht nach Anspruch 1,
**dadurch gekennzeichnet,**
**dass** der Deckel (3) einen Gehäuseteil (12) mit einer zu öffnenden Abdeckung (13) und einer Bodenwand (5) aufweist, durch die das Durchgangsloch (14) hindurchführt.

3. Unterflur-Schacht nach Anspruch 2,
**dadurch gekennzeichnet,**
**dass** sich der Gehäuseteil (12) in einem Randbereich des Deckels (3) befindet.

4. Unterflur-Schacht nach einem der Ansprüche 1 bis 3,
**dadurch gekennzeichnet,**
**dass** die Elemente der Energieverteilung und/oder Telekommunikation (11) innerhalb der Haube (7) an deren Boden und/oder Seitenwand (6, 8, 10) befestigt sind.

5. Unterflur-Schacht nach einem der Ansprüche 1 bis 4,
**dadurch gekennzeichnet,**
**dass** die Haube (7) aus rostfreiem Stahl besteht.

6. Unterflur-Schacht nach einem der Ansprüche 1 bis 5,
**dadurch gekennzeichnet,**
**dass** der Deckel (3) mit der Haube (7) in eine vertikale Lage oder darüber hinaus schwenkbar ist.

## Claims

1. Sub-surface shaft (1) for energy distribution and/or telecommunications, with a cover (3) which on one side is mounted so as to be pivotable on the shaft frame (2), wherein below the cover (3) is disposed an airtight case (7) which can be pivoted out of a horizontal position in the shaft (1) into a raised position in which it projects out of the shaft (1), wherein in the horizontal position the case (7) covers elements for power distribution and/or for telecommunications from above and wherein the case (7) is fastened to the cover (3) so that it is pivotable jointly with the cover (3), **characterised in that** the case (7) is fastened immovably to the cover (3) and that the cover (3) has a through hole (14) which is offset laterally with respect to the case (7) and through which a hose can be introduced from the outside of the shaft into the interior of the shaft in order to extract water from the shaft.

2. Sub-surface shaft according to claim 1, **characterised in that** the cover (3) has a housing part (12) with a flap (13) to be opened and a bottom wall (5) through which the through hole (14) passes.

3. Sub-surface shaft according to claim 2, **characterised in that** the housing part (12) is located in an edge region of the cover (3).

4. Sub-surface shaft according to one of claims 1 to 3, **characterised in that** the elements for energy distribution and/or for telecommunications (11) are fastened inside the case (7) on the bottom and/or side wall (6, 8, 10) thereof.

5. Sub-surface shaft according to one of claims 1 to 4, **characterised in that** the case (7) is made of stainless steel.

6. Sub-surface shaft according to one of claims 1 to 5, **characterised in that** the cover (3) is pivotable with the case (7) into or beyond a vertical position.

## Revendications

1. Cage souterraine (1) pour la distribution d'énergie et/ou pour la télécommunication, comprenant un couvercle (3), qui est installé au niveau d'un côté de manière à pouvoir pivoter au niveau du châssis de cage (2), dans laquelle est disposé sous le couvercle (3) un capot (7) étanche à l'air, qui peut être pivoté depuis une position horizontale dans la cage (1) dans une position relevée, dans laquelle il dépasse de la cage (1), dans laquelle le capot (7) recouvre depuis le haut, dans la position horizontale, des éléments de la distribution d'énergie et/ou de la télécommunication, et
dans laquelle le capot (7) est fixé au niveau du couvercle (3) si bien qu'il peut pivoter conjointement avec le couvercle (3),
**caractérisée en ce**
**que** le capot (7) est fixé de manière immobile au niveau du couvercle (3), et
**que** le couvercle (3) présente un trou de passage (14), qui est décalé de manière latérale par rapport au capot (7) et par lequel un tuyau flexible peut être introduit à l'intérieur de la cage depuis le côté extérieur de la cage afin d'évacuer par aspiration de la cage de l'eau.

2. Cage souterraine selon la revendication 1,
**caractérisée en ce**
**que** le couvercle (3) présente une partie de boîtier (12) pourvue d'un système de recouvrement (13) à ouvrir et d'une paroi de fond (5), que le trou de passage (14) traverse de part en part.

3. Cage souterraine selon la revendication 2,
**caractérisée en ce**
**que** la partie de boîtier (12) se trouve dans une zone de bordure du couvercle (3).

4. Cage souterraine selon l'une quelconque des revendications 1 à 3,
**caractérisée en ce**
**que** les éléments de la distribution d'énergie et/ou de la télécommunication (11) sont fixés à l'intérieur du capot (7) au niveau du fond et/ou de la paroi latérale (6, 8, 10) de ce dernier.

5. Cage souterraine selon l'une quelconque des revendications 1 à 4,
**caractérisée en ce**
**que** le capot (7) est constitué d'un acier inoxydable.

6. Cage souterraine selon l'une quelconque des revendications 1 à 5,
**caractérisée en ce**
**que** le couvercle (3) peut pivoter avec le capot (7) dans une position verticale ou au-delà.
